(19) Europäisches Patentamt
European Patent Office
Office européen des brevets

(11) **EP 4 379 197 A1**

(12) **EUROPEAN PATENT APPLICATION**

(43) Date of publication:
**05.06.2024 Bulletin 2024/23**

(21) Application number: **22210711.2**

(22) Date of filing: **30.11.2022**

(51) International Patent Classification (IPC):
**F01N 3/021** (2006.01)     **F01N 3/28** (2006.01)
**C04B 35/00** (2006.01)     **D04H 1/4209** (2012.01)

(52) Cooperative Patent Classification (CPC):
(C-Sets available)
**F01N 3/0211; C04B 41/009; C04B 41/4803;
C04B 41/83; D04H 1/4209; D04H 1/46;
F01N 3/2853;** C04B 2111/00362;
C04B 2111/00793; F01N 2450/02          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **3M Innovative Properties Company**
**St. Paul, MN 55133-3427 (US)**

(72) Inventors:
  • **Rosen, Kerstin Christina**
    **41453 Neuss (DE)**

  • **Schaschke, Martin**
    **41453 Neuss (DE)**
  • **Krieg, Harald**
    **41453 Neuss (DE)**
  • **Gervers, Nicole**
    **41453 Neuss (DE)**
  • **Oberle, Daniel**
    **41453 Neuss (DE)**
  • **Middendorf, Claus**
    **41453 Neuss (DE)**

(74) Representative: **Mathys & Squire**
    **Theatinerstraße 7**
    **80333 München (DE)**

(54) **ZERO BINDER POLYCRYSTALLINE MOUNTING MAT WITH IMPROVED PRODUCTION HANDING**

(57)     The present disclosure provides a mounting mat for mounting a pollution control element in a housing, comprising:
(a) an inorganic fibrous mat having a first major surface and a second major surface;
(b) at least one first organic surface additive comprised in the first major surface of the inorganic fibrous mat;
(c) optionally, at least one second organic surface additive different from the at least one first organic coating comprised in the second major surface of the inorganic fibrous mat;
wherein the first surface of the inorganic fibrous mat exhibits a lower friction coefficient than the second major surface.

EP 4 379 197 A1

(52) Cooperative Patent Classification (CPC): (Cont.)

C-Sets
**C04B 41/009, C04B 35/10;**
**C04B 41/4803, C04B 41/4584**

## Description

### Technical Field

The present disclosure relates mounting mats for use in a pollution control device and to methods of making such mat and to pollution control devices containing such mats.

### Background

Pollution control devices are employed to control atmospheric pollution of combustion engines. Such devices typically include a pollution control element. Pollution control elements typically contain catalytic converters or particle filters. For example, catalytic converters help to oxidize carbon monoxide and hydrocarbons or to reduce nitrogen oxides in exhaust gases. Particle filters remove soot or particles of exhaust gases from diesel and gasoline engines.

The pollution control element may be a monolithic structure or a plurality thereof and may be made of metal or ceramic material. Pollution control elements are often honeycombed structures. The pollution control devices further have a housing (typically made of steel) bearing the pollution control element.

Mounting mats are placed between the pollution control element and the housing of the pollution control device to avoid damage to the pollution control element and to compensate for the thermal expansion difference between pollution control element and housing and to prevent exhaust gases from passing between the monolith structures and the housing. Such mounting mats are known and commercially available. They are inserted into the pollution control device in a so-called "canning process". In this process the mounting mat is wrapped around the pollution control element first. Then the pollution control element with the mounting mat wrapped around it are pushed into the housing. The force that is necessary to push the pollution control element with the mounting mat wrapped around it into the housing is referred to in the art as "canning force".

Mounting mats have to be resilient at a full range of operating temperatures over a prolonged period of use. Therefore, they contain predominantly inorganic fibers. Organic binders are used to maintain resiliency and interior strength of the mats. Due to the resiliency of the mats, the canning force does not only depend on friction but also on the compression of the mat.

Efforts have been made to reduce the canning force. In European Patent EP 2 848 720 B1 certain lubricants have been applied to the mat to reduce cold peak compression of the mat and thus reduce the canning force. The lubricants are reported to be used in amounts of at least 0.5 % by weight because lower amounts did not have any impact on the cold peak impression. The lubricants are sprayed onto the fibers during mat making to ensure distribution of the lubricants throughout the entire thickness of the mat.

Typically, the friction between mat and housing is lower than the friction between mat and pollution control element. This is because the interior surface of the housing facing the mat is typically made of steel and has a very smooth surface, while the pollution control element is a porous structure with a comparatively rough structure. It has been found that the interior strength of thick, predominantly polycrystalline mats with low amounts of organic binder, i. e. with low amount of organic content have reduced resistance to the shear forces in the canning process. Despite lower friction between mat surface and housing it has been found that sections of the mat facing the housing get separated and are pushed out of its place between pollution control element and housing during the canning process. When mat material gets pushed out of its place between housing and pollution control device it may have lost its sealing function.

There exists a general desire in the art for mounting mats which facilitate the above-described process and exhibit low canning forces. There exists a further desire in the art that these mounting mats should not loose inorganic materials, in particular certain inorganic metals or metal ions, during their final application in pollution control devices.

### Summary

The present disclosure provides a mounting mat for mounting a pollution control element in a housing, comprising:

   (a) an inorganic fibrous mat having a first major surface and a second major surface;
   (b) at least one first organic surface additive comprised in the first major surface of the inorganic fibrous mat;
   (c) optionally, at least one second organic surface additive different from the at least one first organic coating comprised in the second major surface of the inorganic fibrous mat;
   wherein the first surface of the inorganic fibrous mat exhibits a lower friction coefficient than the second major surface.

In a further aspect there is provided a method for producing a mounting mat, comprising the following steps:

(i) providing an inorganic fibrous mat having a first major surface and a second major surface;
(ii) applying at least one first organic surface additive to the first major surface of the inorganic fibrous mat; and
(iii) optionally, applying at least one second organic surface additive different from the at least one first organic surface additive to the second major surface of the inorganic fibrous mat;

thereby obtaining a mounting mat wherein the first surface of the inorganic fibrous mat exhibits a lower friction coefficient than the second major surface.

The present disclosure further provides a pollution control device containing at least one of the mounting mats as described herein.

In a further aspect there is provided a use of the mounting mat as disclosed herein for assembling a pollution control device.


**Detailed Description**

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of", but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C ($\pm$ 2 °C) at ambient pressure condition of about 101 kPa.

Unless explicitly stated otherwise, all embodiments and optional features of the present disclosure can be combined freely.

In a first aspect, the present disclosure provides a mounting mat for mounting a pollution control element in a housing, comprising:

(a) an inorganic fibrous mat having a first major surface and a second major surface;
(b) at least one first organic surface additive comprised in the first major surface of the inorganic fibrous mat;
(c) optionally, at least one second organic surface additive different from the at least one first organic coating comprised in the second major surface of the inorganic fibrous mat;

wherein the first surface of the inorganic fibrous mat exhibits a lower friction coefficient than the second major surface.

The mounting mats as described herein provide a combination of desirable properties. In particular, the combination of the first major surface of the inorganic fibrous mat comprising a first organic surface additive and the second major surface comprising a different organic surface additive has the effect that the coefficient of friction of the two major surfaces may be adjusted appropriately. In particular, the first major surface exhibiting a lower friction coefficient than the second major surface has the advantage that the friction towards the porous pollution control element will be much higher than the friction to the housing element of the pollution control device. Accordingly, the process step of inserting the pollution control element wrapped into the housing element of a pollution control device is much improved. Preferably, the friction coefficient of the first surface of the mounting mat is more than 15 % lower, preferably more than 25 %, and more preferably more than 35 % lower than the friction coefficient of the second surface. These differences in friction coefficients between first and second major surface of the mounting mats as described herein give rise to particular advantageous properties during the so-called canning process such as particular evidently advantageous canning forces.

### Mounting mats

The mounting mats according to the present disclosure are comparatively thick and contain low amounts of organic materials. They comprise an inorganic fibrous mat having a first major surface and a second major surface, wherein the second major surface is opposite the first major surface. The mats according to the present invention are easy to handle during the assembly of pollution control devices, in particular during the so-called canning because they preferably require a canning force of less than 5700 N in the canning process, for example a canning force between 3000 N and 5500 N.

An inorganic fibrous mat suitable for use in the present disclosure preferably contains one or more non-woven fabric made exclusively or predominantly from polycrystalline fibers. "Predominantly" as used herein means the content of polycrystalline fibers is at least 75 % by weight based on the total weight of the mat, preferably at least 85 % by weight, more preferably at least 90 % by weight and most preferably at least 95 % by weight (based on the total weight of the mat). The use of polycrystalline fibers, particular in non-woven mats, has the advantage that the mat exhibits very good temperature resistance and is also well-adaptable to various shapes. In particular, polycrystalline fibrous mats are easily wrapped around porous pollution control elements commonly used in the art.

Polycrystalline fibers are fibers that contain at least 50 % by weight based on the weight of the fibers of $Al_2O_3$, preferably at least 70 % by weight and may or may not contain other oxides, for example $SiO_2$.

The mounting mat may include other fibers in amounts of less than 25 % by weight based on the weight of the mat, preferably less than 15 % by weight, more preferably less than 10 % by weight or less than 5 % even 0 % by weight based on the weight of the mat. Preferably, the mat according to the present disclosure contains at least 95 % by weight preferably at least 97 % by weight of fibers (weight percentages are based on the weight of the mat).

The mounting mat according to the present invention may have a $SiO_2$ content, typically as a component of fibers, of from about 0.5 to 35 % by weight, for example from about 6 % to about 25 % by weight of $SiO_2$ (based on the weight of the mat).

The fibers of the mounting mat typically have a diameter of from about 3 micrometers to 10 micrometers, preferably between 5 micrometers and 8 micrometers. Preferably the average diameter (median or D50) is between 5 micrometers and 7 micrometers. The average particle diameter can be measured by electron microscopy and can be calculated from at least 100 fibers.

A mounting mat suitable for use in the invention may have a bulk density of from 130 to 190 kg/cubic meter, preferably from 150 kg/cubic meter to 185 kg/cubic meter, more preferably from 160 kg/cubic meter to 180 kg/cubic meter.

Preferably the mounting mat according to the present disclosure has an area weight (also referred to as "grammage" or "area density") of from about 1400 to 2500 g/square meter.

The mounting mat according to the present invention has a length, a width and a thickness (all orthogonal to each other) and the thickness being the smallest dimension. The thickness typically is from about 8.0 mm to 15.4 mm, or from 9.0 to 12.5 mm.

In one embodiment of the present invention the mat has an area weight from 1500 g/square meter to 1800 g/square meter and a thickness from 8.0 mm to 12.4 mm. In another embodiment of the present invention the mat has an area weight from 1800 to 2400 g/square meters and a thickness from 8.8 mm to 15.0 mm.

The mat is preferably kept in its compressed form and thickness by needle-punching or stitch-bonding, i. e. the mat is needle-punched or stitch-bonded.

### Inorganic fillers

The inorganic fibrous mat for use in the present disclosure may or may not contain inorganic materials other than fibers. Typical inorganic materials used in mounting mats for pollution control devices include alumina particles, silica particles and intumescent materials. As used herein, "intumescent material" means an inorganic material that expands, foams, or swells when exposed to a sufficient amount of thermal energy. Intumescent materials include vermiculites and graphites. However, preferably the mat according to the invention does not contain any intumescent material, or contains only low amounts of intumescent materials, for example in amounts of from 0 to less than 5 % by weight (based on the weight of the mat). The mat may or may not contain inorganic fillers, for example clays or metal oxides. Typical amounts include amounts from 0 to 5 % by weight (based on the weight of the mat).

### First organic surface additives

The mats according to the present disclosure are characterized in that at least one organic surface additive is comprised in the first major surface of the inorganic fibrous mat. In other words, the mat contains all or the majority of the at least one organic surface additive on the surface that will be exposed to the housing of the pollution control device. Suitable first organic surface additives are organic compounds having either a melting point above 25 °C and less than 70 °C, preferably above 30 °C and less than 45 °C or are oils with a kinematic viscosity at 40 °C of between 4 and 145 $mm^2/s$, preferably between 4.5 and 45 $mm^2/s$, for example between and including 4.5 and 24 $mm^2/s$ (measured in accordance with ASTM D445), or both.

Preferably, the first surface additives are used in amounts that do not show a statistically significant reduction of the compression (cold peak compression) of the mat. Typically, the mats according to the present invention contain less than 0.5 % by weight, preferably less than 0.2 % by weight of first organic surface additives. Although such additives may not have a measurable effect on reducing the compression or friction in the canning process in the concentrations they are used and appear not to act as lubricants, they may be selected from the class of known lubricants and they may act as lubricants and show reduction of either friction or compression when used in higher concentrations, for example in amounts of at least 0.5 % by weight (based on the weight of the mat).

Several different surface additives may be used or only the same surface additive may be used, however, the total amount of first organic surface additives present in the mat typically is less than 0.5 % by weight, preferably less than 0.3 % by weight as measured by LOI For example, in some embodiments the mat contains the one or more surface additive in a total amount of from about 0.005 % by weight to 0.4 % by weight, preferably from 0.01 % by weight or 0.02 % by weight up to 0.3 % by weight based on the weight of the mat as measured by LOI.

The surface additives may not have to be evenly distributed across the entire thickness of the mat to show a reduction of the canning force. Preferably, the surface additives according to the invention are contained mainly or exclusively on the first major surface of the mounting mat that is exposed or will be exposed to the housing. Therefore, the first organic surface additives may be distributed unevenly across the thickness of the mat and the majority of the additives may be found within a distance from 0 mm to 2 mm across the thickness of the mat when measured from the surface facing or meant to be facing the housing of the pollution control device. The surface of the mat facing or meant to be facing the pollution control element may in fact contain less than 0.01 % or 0 % by weight (based on the weight of the mat) of any surface additives. Therefore, it is not necessary to treat the fibers of the mat with the surface additive when producing the mats. It is sufficient and preferred to treat the finished mat with the surface additive and preferably to treat only the surface of the finished mat that will be exposed to the housing with the surface additive.

Suitable organic surface additives include waxes (e. g. polypropylene waxes) and organic oils. Examples of suitable organic surface additives include hydrocarbons and functional hydrocarbons, i. e. hydrocarbons containing one or more functional groups, and silicone oils. The hydrocarbons and functional hydrocarbons may contain from 10 to 40 carbon atoms and preferably are saturated, aliphatic hydrocarbons.

Hydrocarbons include cyclic, linear and branched hydrocarbons, preferably aliphatic hydrocarbons and saturated hydrocarbons and include mineral oils. Hydrocarbons also include unsaturated, preferably olefinically unsaturated hydrocarbons and include cyclic alkenes or alkines.

Functional hydrocarbons may contain from 10 to 40 carbon atoms and contain at least one functional group selected from hydroxy groups, carboxylic acid ester groups, anhydride groups and combinations thereof. Preferred functional groups are ester groups. Specific examples of functional hydrocarbons include fatty alcohols, fatty acid esters. Particular preferred examples include diester or polyester oils, for example ester, diester or polyester of carboxylic acids with mono- or polyhydric alcohols, esters of fatty acids or fatty alcohols including triglycerides.

Suitable esters are described, for example, in European patents EP 0 374 671, EP 0 374 672, EP 0 386 638, EP 0 386, 636 and EP 535 074 and EP 0 532 570.

The first organic surface additives, preferably the lubricants according to the present disclosure are preferably sprayed onto the fibrous inorganic mat. However, other methods of applying liquids to a surface may be applied as well.

One particular preferred feature of the mounting mat according to the present disclosure is the absence of additives or other ingredients that are typically used in mounting mats for mounting pollution control elements into housings of pollution control devices. This applies in particular to binder compounds typically used to bind fibers together for example upon heat activation, for example by polymerization, cross-linking etc. or by having adhesive properties. That is, it is preferred that the mounting mat according to the present disclosure does not contain binder compounds such as organic binders. Examples of organic binders include but are not limited to polymers or copolymers of acrylates, methacrylates, styrenes, butadienes, vinyl pyridines, acrylonitriles, vinyl chlorides, vinyl acetates, vinyl alcohols, ethylenes, polyurethanes, polyamides, silicones, polyesters, epoxy resins and combinations thereof.

Second organic surface additives

It may be desirable to increase the difference between the coefficients of friction of the first and second major surfaces of the mounting mats as described herein even further and/or adjust to desired values. In these cases, it may be desirable to increase the coefficient of friction of the second major surface of the mounting mat, i.e. the surface facing the pollution control element. For this purpose, it is preferred that at least one second organic surface additive different from the at least one first organic coating comprised in the second major surface of the inorganic fibrous mat. This has the effect that the friction coefficient of the second major surface of the inorganic fibrous mat may be adjusted as desired such as increased relative to the friction coefficient of the first major surface. In one aspect, the at least one second organic surface additives are not particularly limited. However, it is preferred that the at least one second surface additive does not contain inorganic salts or inorganic ions, preferably do not contain sodium, potassium, lithium, calcium or magnesium. The absence of these inorganic salts or ions has the effect that undesired influence or even poisoning of catalytic compounds or electronic components which may be comprised in the pollution control device may be avoided. Preferred compounds suitable as second organic surface additives are selected from hydrocarbon compounds, preferably from solid hydrocarbon compounds. These compounds are readily available in large amounts, nontoxic, easy to apply in modern large-scale manufacturing operations and have well-understood chemistry. Preferably, the hydrocarbon compounds are selected from carbohydrates. Surprisingly, carbohydrates yield the desired increase of friction coefficient in the desired application. In this regard, it is preferred that the carbohydrates are selected from monosaccharides, disaccharides, oligosaccharides and polysaccharides, and their equivalents containing amino moieties and/or sulfone moieties, and any combinations and mixtures thereof. It is preferred that the monosaccharides are selected from glucose, fructose, galactose, and any combinations and mixtures thereof. Similarly, it is preferred that the disaccharides are selected from sucrose, lactose, maltose, trehalose, cellobiose, chitobiose, and any combinations and mixtures thereof, preferably from sucrose, lactose, and maltose, and any combinations and mixtures thereof. As such, even commercially available sugar for kitchen purposes may be advantageously used in the context of the present disclosure. Given the abundance of the availability of this sugar, a commercially and environmentally benign solution for increasing the friction coefficient of the second major surface of the mounting mat as described herein may be easily achieved. Similarly, it is preferred that the oligosaccharides are selected from raffinose, maltodextrins, cellodextrins, fructo-oligosaccharides, galactooligosaccharides, and any combinations and mixtures thereof. Preferably, the at least one second organic additive is contained in the mounting mat in an amount in the range of from 0.005 to 0.4 wt.-%, preferably from 0.008 to 0.2 wt.-%, more preferably from 0.01 to 0.1 wt.-%, based on the total weight of the mounting mat. While lower amounts yielded no significant or inconsistent results in terms of increase of friction coefficients, higher amounts may lead to inconsistent results, inconsistent surfaces or an undesired load of organic compounds in the mounting mat.

A further particular important aspect of the present disclosure is the low load of organic compounds in the mounting mat as disclosed herein, preferably in combination with the avoidance of presence of extractable inorganic salts or inorganic cations. The presence of certain inorganic cations may lead to undesired side effects on the catalytic components and/or electronic equipment contained in the pollution control element or the pollution control device. Accordingly, it is submitted that the mounting mat according to the present disclosure does not contain or is essentially free of binders. It is further preferred that the mounting mat as described herein exhibits a total organic content as determined by LOI of less than 2.9 %, preferably in the range of from 0.6 to 2.6 %. Similarly, it is preferred that the mounting mat as described herein yields an extract content according to DIN EN ISO 11885:2009 of sodium, potassium, lithium, calcium and/or magnesium, preferably of sodium, lithium and/or potassium, more preferably a sodium of less than 50 ppm, preferably of less than 40 ppm, more preferably of less than 30 ppm, and more preferably of less than 20 ppm. An extract of these inorganic compounds, in particular in the form of cations, in the amounts as described herein is particularly advantageous in the art of present-day pollution control devices.

Method of making mounting mats

The present disclosure further provides a method for producing a mounting mat, comprising the following steps:

(i) providing an inorganic fibrous mat having a first major surface and a second major surface;
(ii) applying at least one first organic surface additive to the first major surface of the inorganic fibrous mat; and
(iii) optionally, applying at least one second organic surface additive different from the at least one first organic surface additive to the second major surface of the inorganic fibrous mat;

thereby obtaining a mounting mat wherein the first surface of the inorganic fibrous mat exhibits a lower friction coefficient than the second major surface.

It is understood that the inorganic fibrous mat, the first organic surface additive, the second surface additive and all the compounds, ranges and disclosure of the mounting mat according to the present disclosure fully apply also to the method according to the present disclosure.

Furthermore, it is preferred that the at least one first organic surface additive is applied to the first surface of the inorganic fibrous mat by spraying. This is advantageous since it may be carried out easily, reliably and with consistent results also in continuous processes. Thus, it is preferred that the method as described herein is a continuous process, preferably carried out in automatic and/or robotic equipment. Similarly, it is preferred that the at least one second organic surface additive is applied to the second surface of the inorganic fibrous mat by spraying, by spraying as aqueous solution, by dipping the inorganic fibrous mat into a solution, by dipping the inorganic fibrous mat into the second surface additive in molten state, or by means of powder dry coating, preferably by spraying as aqueous solution or by means of powder dry coating. Furthermore, when the method contains the step (iii), it is preferred that the method further comprises an additional step (iv) heating the mat for a period of time. This will have the effect of fixing the second organic surface additive, in particular the preferred hydrocarbons, to the second major surface of the inorganic fibrous mat. In this regard, it is preferred that heating in step (iv) comprises exposing the mat to temperature of at least 100 °C, preferably of at least 120 °C, and more preferably of at least 140 °C. Preferably, the mat is exposed to a temperature of up to 250 °C, preferably of up to 230 °C, and more preferably of up to 210 °C. That is, it is preferred that the mat is exposed to a temperature in the range of from 100 to 250 °C, preferably from 120 to 230 °C, and more preferably from 140 to 210 °C.

Pollution control devices

The present disclosure also provides a housing containing the mounting mat and a pollution control element. The housing may be part of a pollution control device or the combination and assembly of pollution control element, mounting mat and housing may form a pollution control device. The mounting mat as described herein can be placed between the pollution control element and the housing when mounting the pollution control element into the housing, for example during the assembly of the pollution control device.

A pollution control element or exhaust gas after treatment element according to the present disclosure may be any kind of device that is used to reduce the amount of unwanted ingredients in exhaust gases of, for example, vehicles or industrial machines. Typical examples of pollution control elements are catalytic converters or diesel particulate filters. Catalytic converters typically contain a ceramic monolithic structure having walls that support the catalyst or a plurality of monolithic structures. The catalyst typically oxidizes carbon monoxide and hydrocarbons or reduces the oxides of nitrogen in the engine exhaust gases to control atmospheric pollution. The monolithic structures may be made of metal or of a ceramic material and may be porous and/or honeycomb-structured. The devices typically have a housing (typically made of stainless steel). The mounting mat according to the invention is placed between the pollution control element and the housing and may hold the pollution control element in place or may help to hold the pollution control element in place.

Hence, the present disclosure further provides a use of the mounting mat as described herein for assembling a pollution control device as described herein. Preferably, the use comprises wrapping the mounting mat around a pollution control element such that the second major surface of the mounting mat is adjacent the major surface of the pollution control element. Similarly, it is preferred that the use further comprises inserting the pollution control element wrapped in the mounting mat into a housing such that the first major surface of the mounting mat faces the housing, wherein the housing is part of a pollution control device.

## EXAMPLES

The present invention is illustrated in greater detail in the following examples. These examples are merely for illustrative purposes. It is not intended to limit the invention to the specific embodiments illustrated in these examples.

## Test methods

Thickness

The thickness of the mats was determined according to ISO 10635:1999(E), (dial gauge comparator method).

Bulk density

The bulk density was determined according to ISO 10635:1999(E).

Total organic content (Loss on Ignition: LOI)

The total content of organic material of a mat is determined by the loss on ignition method. A sample of amounting mat having a dimension of 50 mm × 50 mm (length × width) was dried at 110 °C for 2 hours using a hot air oven ULP 500 from Memmert GmbH & Co. KG. The sample was then allowed to cool to room temperature ($23 \pm 2$ °C.) in a desiccator under dry conditions (e. g. using silica gel or a molecular sieve). After weighing the sample, the sample was heated ("fired") to 600 °C for 2 hours using e. g. a muffle furnace LH 120/14 from Nabertherm, then allowed to cool to room temperature in a desiccator under dry conditions and weighed again.

The weight loss, i. e., the difference in weight before and after heating to 600 °C is generally considered as LOI of a fiber mat, presuming that under these conditions essentially the whole content of organic material decomposes and dissipates.

The LOI in % is calculated as follows:

$$\text{LOI (in \%)} = \frac{\text{weight before firing (in g)} - \text{weight after firing (in g)}}{\text{weight before firing (in g)}} \times 100$$

Friction

A material tester (Zwick/Roell Model Z010 from Zwick GmbH & Co KG, Ulm, Germany) was used to measure the friction in a canning process. The vertical axis of the test machine was equipped with a lower fixed stainless steel anvil and a load cell capable of measuring forces up to 10 kN, and an upper stainless steel anvil mounted to the movable crosshead of the test machine. Before each test both anvils were covered by a new, degreased ferritic stainless steel plate, type 409, of 1 mm thickness in order to perform the friction on a defined and reproduceable surface. A second horizontal axis equipped with a 1 kN load cell was used to pull out the sample while the mat was in a compressed state.
The fiber mat test samples were die cut to a size of 50 mm length $\times$ 40 mm width. Next, the surface of a sample opposite the surface to be tested was attached by a double-sided adhesive tape to a sheet of steel with a dimension of 150 mm length $\times$ 50 mm width. The two test specimens were positioned close to one end at exactly the same position on both sides of the sheet of steel.
The so prepared three-layer-sandwich construction (mat/metal sheet /mat) was placed between the anvils of the test machine. The other end of the metal sheet was attached to the horizontal axis so that the longitudinal axis of the sheet coincided with the horizontal pull axis. Two identical mat types facing the metal sheet with the same side were used to determine the frictional force.
The upper plate was moved downwards onto the sample until a normal force of 500 N was reached. The force was held constant over the complete test time. After 10 min relaxed time the horizontal axis pulled with a speed of 50 mm/min the compressed samples over the steel anvil surfaces. The pulling force was measured with a 1 kN load cell over the full distance of about 20 mm.
The coefficient of static friction $\mu$ is calculated from the maximum pull force $F_{pull}$ divided by the normal force $F_N$ exerted between the two surfaces according to formula:

$$\mu = F_{pull} / F_N \times 1/2$$

Compression (Cold Peak Compression; P0)

A static compression test was conducted at ambient conditions on the mats prepared in the examples to determine their resistance to compression. The test equipment comprised two anvils that could be advanced toward one another, thus compressing a mat sample that had been placed between them.
For the specific tests in these examples a material test machine from Zwick/Roell Model Z010 from Zwick Gmbh & Co KG, Ulm, Germany was utilized. The device was fitted with a 10kN load cell to measure the resistance of the sample mat to compression and with a height measuring device for measuring the thickness of the sample at various stages of compression.
Samples were prepared by taking circular die-cuts with a diameter of 50.8 mm from the mounting mat. Three samples were taken at equally spaced intervals across the width of the mat at least 25 mm from the edge. The test was conducted by the following procedure. Each sample was first weighed. Then the weight per area of each sample was calculated by dividing the weight of the sample by the surface area of the sample (calculated from the known diameter of 50.8 mm) and was recorded in g/msquare meters. The gap between the anvils that was necessary to reach a final compressed density of 0.40 g/cm was then calculated. This is the desired density where the resistance to compression is to be measured.

Example calculation:

.

$$\text{Gap size in cm} = \frac{\text{Weight per area in g/cm2}}{\text{Initial Density in g/cm}}$$

Thus a sample with the weight per area of 2200 $g/m^2$ and an initial density of ca. 0.40 $g/cm^3$, would need to be compressed to a thickness of 0.55 cm (5.5 mm) to obtain a final density of 0.40 $g/cm^3$. The sample was then placed on the lower anvil of the test equipment. The gap between the anvils was then closed at a rate of 25.4 mm per minute, starting from 20 mm distance between the anvils. The advancement of the anvils was then stopped at the gap between the anvils that was calculated above.

The maximum force of the entire test is considered as Cold Peak Compression P0.

Canning Force

Fiber mats were wound lengthwise around the external surface of a cylindrical ceramic (cordierite) substrate body which had a 132 mm diameter and a length of 128 mm. The mats were cut to a size such that they can be wrapped around once over the entire circumference of the substrate body and over the entire length of the substrate body. The substrate with the fiber mat wrapped around it was stuffed into a cylindrical steel casing having a diameter of greater somewhat greater than the combined diameter of substrate body with the mat wrapped around it. For example for mats with a thickness of about 10.8 mm the casing had a diameter of about 144 mm. The steel casing had a length of 230 mm. Mat and substrate body were pushed into the casing by using a guide cone at a rate of 500 mm/sec. The inner surface of the steel casing was visibly smooth and the wall thickness of the casing was about 5 mm. The diameter of the steel casing was calibrated for each canning such that the gap bulk density (GBD) of the mat between the substrate body and the casing was kept at 0.40 g/ccubic meters. This was done by pressing the steel casing together and reducing its diameter until the gap between housing and substrate has reached the distance at which the mat is compressed to a calculated bulk density of 0.40 g/ccubic meters taking into account the area weight of the mat. During the above canning process, i. e. when the entire substrate had been inserted into the casing the force required to achieve the insertion was measured. The canning force is the maximum force that was recorded during this process.

Sodium extract content

The sodium extract content was determined as described in DIN EN ISO 11885:2009.

**EXAMPLES**

Example 1

Polycrystalline, needle-punched mounting mats having a thickness of 12.5 mm +/2.0 mm were provided. The mats contained more than 75 % by weight of polycrystalline fibers (average fiber diameter 5-7 micrometers, $Al_2O_3$, content >70 %) and had an area weight of 2200 g/square meters. A surface additive was sprayed on the surface of the mat that would be facing the housing in a canning process by using a spray pump. The amount of surface additive applied to the mat was such that the mat contained 0.05 % by weight based on the weight of the mat of the surface additive. The surface additive was an organic oil having a kinematic viscosity of 6.3 msquare meters/s at 40 °C. Four samples were prepared this way and tested for friction coefficient $\mu$. The averaged results are shown in table 1.

Table 1: Friction coefficient untreated mat surface vs. treated mat surface showing a clear decrease in friction coefficient upon treatment with a first surface additive.

| Ex. 1 | Sample description | Friction coefficient |
|---|---|---|
| | untreated mat surface | 0.26 |
| | treated mat surface | 0.17 |

Example 2

Polycrystalline, needle-punched mats were tested for LOI (%) and extractable sodium content with ICP AES.

4 g of each mat material was diluted in 35 ml deionized water and were heated in an oven for 3 h at 60 °C. Afterwards the solution was filtered and filled in glass flakes and the sodium content was determined. Three different commercially available mats from the Interam line were tested against a polycrystalline, needle-punched mat according to the present disclosure which did not contain any inorganic or organic binder. The results are summarized in table 2.

Table 2: LOI and extractable sodium content.

|  | LOI [%] | Sodium extractable content [ppm] |
|---|---|---|
| Comp. Ex. 1 (Interam 1600HTE) | 5 | 228 |
| Comp. Ex. 2 (Interam 1600ANB) | 0 | 220 |
| Comp. Ex. 3 (Interam 1600HTG) | 1.5 | 85 |
| Ex. 2 | <0.5 | <2 |

Example 3

Needle-punched polycrystalline mats having a weight of 2200 g/square meter containing no binder were coated with sugar. Samples having a size of 100 mm × 100 mm were generated. In order to obtain an even distribution of sugar on the sample surface, the sugar powder was transferred onto the surface through a first sieve (180 micrometer) and a subsequent second sieve (150 micrometers). The weight of the material was measured before and after the sugar coating. The results are summarized in table 3. Afterwards the samples were treated in an oven at about 190 °C for about 3 min. Afterwards, friction coefficients were determined of the sugar-treated surfaces. The results are summarized in table 4. Furthermore, the sodium extractable contents of the samples were determined. No significant rise of sodium content could be determined after the sugar coating vs. a comparison sample containing no sugar coating. Also, after storing the coated substrates for 3 weeks at room temperature, no changes could be determined.

Table 3: Sugar content of samples.

|  | Ex. 3.1 | Ex. 3.2 | Ex. 3.3 | Ex. 3.4 | Ex. 3.5 |
|---|---|---|---|---|---|
| Weight mat [g] | 21.715 | 21.745 | 21.195 | 21.765 | 21.329 |
| Powdered sugar [g] | 0.01 | 0.006 | 0.003 | 0.002 | 0.001 |
| Sugar content [wt.-%] | 0.046 | 0.028 | 0.014 | 0.009 | 0.005 |

Table 4: Results of tests.

|  | LOI calc. [%] | Friction coefficient $\mu$ |
|---|---|---|
| Ex. 3.1 | 0.046 | 0.35 |
| Ex. 3.2 | 0.028 | 0.35 |
| Ex. 3.3 | 0.014 | 0.32 |
| Ex. 3.4 | 0.009 | 0.24 |
| Ex. 3.5 | 0.005 | 0.23 |

**Claims**

1.   Mounting mat for mounting a pollution control element in a housing, comprising:

(a) an inorganic fibrous mat having a first major surface and a second major surface;
(b) at least one first organic surface additive comprised in the first major surface of the inorganic fibrous mat;
(c) optionally, at least one second organic surface additive different from the at least one first organic coating comprised in the second major surface of the inorganic fibrous mat;
wherein the first surface of the inorganic fibrous mat exhibits a lower friction coefficient than the second major surface.

2. Mounting mat according to claim 1, wherein the mounting mat yields a sodium extract content according to DIN EN ISO 11885:2009 of less than 50 ppm, preferably less than 40 ppm, more preferably less than 30 ppm, even more preferably less than 20 ppm.

3. Mounting mat according to claim 1 or claim 2, wherein the inorganic fibrous mat contains at least by 75 % by weight of polycrystalline fibers, preferably at least 85 % by weight based on the total weight of the inorganic fibrous mat.

4. Mounting mat according to any one of the preceding claims, wherein the mounting mat exhibits a total organic content of less than 2.9 % (measured per LOI), preferably from 0.6 % to 2.6 %.

5. The mounting mat according to any one of the preceding claims, wherein the total amount of the at least one first organic surface additive in the mounting mat as measured per LOI is from 0.005 to 0.4 wt.-%, based on the weight of the mounting mat.

6. The mounting mat according to any one of the preceding claims, wherein the at least one first organic surface additive includes an aliphatic hydrocarbon having from 10 to 40 carbon atoms or an aliphatic functionalized hydrocarbon having from 10 to 40 carbon atoms and wherein the functionalized hydrocarbon has one or more functional groups selected from hydroxy groups, carboxylic acid ester groups, ketone groups, oxygen-ether groups and combinations thereof.

7. The mounting mat according to any one of the preceding claims, wherein the mounting mat does not comprise a binder.

8. The mounting mat according to any one of the preceding claims, wherein the at least one second organic surface additive is selected from hydrocarbon compounds, preferably from solid hydrocarbon compounds.

9. The mounting mat according to claim 8, wherein the hydrocarbon compounds are selected from carbohydrates, preferably from are selected from monosaccharides, disaccharides, oligosaccharides and polysaccharides, and their equivalents containing amino moieties and/or sulfone moieties, and any combinations and mixtures thereof.

10. The mounting mat according to claim 9, wherein the disaccharides are selected from sucrose, lactose, maltose, trehalose, cellobiose, chitobiose, and any combinations and mixtures thereof, preferably from sucrose, lactose, and maltose, and any combinations and mixtures thereof.

11. The mounting mat according to any one of the preceding claims, wherein the at least one second organic additive is contained in the mounting mat in an amount in the range of from 0.005 to 0.4 wt.-%, preferably from 0.008 to 0.2 wt.-%, more preferably from 0.01 to 0.1 wt.-%, based on the total weight of the mounting mat.

12. A pollution control device containing at least one mounting mat according to any one of claims 1 to 11.

13. A method for producing a mounting mat, comprising the following steps:

   (i) providing an inorganic fibrous mat having a first major surface and a second major surface;
   (ii) applying at least one first organic surface additive to the first major surface of the inorganic fibrous mat; and
   (iii) optionally, applying at least one second organic surface additive different from the at least one first organic surface additive to the second major surface of the inorganic fibrous mat;
   thereby obtaining a mounting mat wherein the first surface of the inorganic fibrous mat exhibits a lower friction coefficient than the second major surface.

14. The method according to claim 13, wherein the at least one second organic surface additive is applied to the second surface of the inorganic fibrous mat by spraying, by spraying as aqueous solution, by dipping the inorganic fibrous mat into a solution, by dipping the inorganic fibrous mat into the second surface additive in molten state, or by means of powder dry coating, preferably by spraying as aqueous solution or by means of powder dry coating.

15. Use of the mounting mat according to any one of claims 1 to 11 for assembling a pollution control device.

Europäisches Patentamt
European Patent Office
Office européen des brevets

# EUROPEAN SEARCH REPORT

Application Number

EP 22 21 0711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/038366 A1 (3M INNOVATIVE PROPERTIES CO [US]) 19 March 2015 (2015-03-19) | 1-7,12, 13,15 | INV. F01N3/021 F01N3/28 |
| Y | * page 7, line 9 - page 8, line 17; claims 1,3,6,7,9,13 * | 8,11,14 | C04B35/00 |
| A | | 9,10 | D04H1/4209 |
| Y | WO 2008/121801 A1 (3M INNOVATIVE PROPERTIES CO [US]; KUNZE ULRICH E [DE] ET AL.) 9 October 2008 (2008-10-09) | 8,11,14 | |
| A | * page 10, paragraph 3 - page 32, paragraph 1 * | 1,2,12, 13 | |
| X | WO 2009/048854 A1 (3M INNOVATIVE PROPERTIES CO [US]; KUNZE ULRICH [DE] ET AL.) 16 April 2009 (2009-04-16) | 1-7,12, 13,15 | |
| Y | * paragraphs [00120] - [00124]; claims 1,3,11 * | 8,9,11 | |
| A | * paragraphs [0071] - [0090] * | 10 | |
| Y | EP 0 816 065 A1 (IBIDEN CO LTD [JP]; NISSAN DIESEL MOTOR CO [JP]) 7 January 1998 (1998-01-07) | 8,9,11 | TECHNICAL FIELDS SEARCHED (IPC) |
| A | * page 3, lines 48-57; claims 2,5 * | 10 | F01N C04B D04H |

The present search report has been drawn up for all claims

| Place of search | Date of completion of the search | Examiner |
|---|---|---|
| Munich | 25 April 2023 | Kolland, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 0711

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | | Publication date | Patent family member(s) | | Publication date |
|---|---|---|---|---|---|
| WO 2015038366 | A1 | 19-03-2015 | CN | 105531413 A | 27-04-2016 |
| | | | EP | 2848720 A1 | 18-03-2015 |
| | | | JP | 6429880 B2 | 28-11-2018 |
| | | | JP | 2016530408 A | 29-09-2016 |
| | | | KR | 20160052640 A | 12-05-2016 |
| | | | US | 2016222849 A1 | 04-08-2016 |
| | | | US | 2018363522 A1 | 20-12-2018 |
| | | | WO | 2015038366 A1 | 19-03-2015 |
| WO 2008121801 | A1 | 09-10-2008 | EP | 2132422 A1 | 16-12-2009 |
| | | | GB | 2447959 A | 01-10-2008 |
| | | | KR | 20090127370 A | 10-12-2009 |
| | | | KR | 20150067399 A | 17-06-2015 |
| | | | US | 2010150791 A1 | 17-06-2010 |
| | | | US | 2012269691 A1 | 25-10-2012 |
| | | | WO | 2008121801 A1 | 09-10-2008 |
| | | | ZA | 200907608 B | 28-07-2010 |
| WO 2009048854 | A1 | 16-04-2009 | CN | 101883666 A | 10-11-2010 |
| | | | EP | 2212073 A1 | 04-08-2010 |
| | | | JP | 5646999 B2 | 24-12-2014 |
| | | | JP | 2011501015 A | 06-01-2011 |
| | | | KR | 20100076014 A | 05-07-2010 |
| | | | US | 2010209306 A1 | 19-08-2010 |
| | | | US | 2014154147 A1 | 05-06-2014 |
| | | | WO | 2009048854 A1 | 16-04-2009 |
| EP 0816065 | A1 | 07-01-1998 | DE | 69630681 T2 | 22-04-2004 |
| | | | DK | 0816065 T3 | 22-03-2004 |
| | | | DK | 1270202 T3 | 07-08-2006 |
| | | | DK | 1306358 T3 | 21-02-2005 |
| | | | EP | 0816065 A1 | 07-01-1998 |
| | | | EP | 1270202 A2 | 02-01-2003 |
| | | | EP | 1306358 A2 | 02-05-2003 |
| | | | EP | 1382442 A2 | 21-01-2004 |
| | | | EP | 1382443 A2 | 21-01-2004 |
| | | | EP | 1382444 A2 | 21-01-2004 |
| | | | EP | 1382445 A2 | 21-01-2004 |
| | | | US | 5914187 A | 22-06-1999 |
| | | | WO | 9725203 A1 | 17-07-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2848720 B1
- EP 0374671 A
- EP 0374672 A
- EP 0386638 A
- EP 0386636 A
- EP 535074 A
- EP 0532570 A